# EUROPEAN PATENT SPECIFICATION

(11) **EP 4 333 146 B1**
(45) Date of publication and mention of the grant of the patent: **25.02.2026**
(21) Application number: 23807810.9
(22) Date of filing: 28.04.2023
(51) Int. Cl.: H01M 10/04, H01M 10/0585, H01M 50/406, H01M 10/0525

(54) **ELECTRODE ASSEMBLY MANUFACTURING APPARATUS FOR PREVENTING SEPARATOR FOLDING AND ELECTRODE ASSEMBLY MANUFACTURED USING THE SAME**
VORRICHTUNG ZUR HERSTELLUNG EINER ELEKTRODENANORDNUNG ZUR VERHINDERUNG VON SEPARATORFALTUNG UND DAMIT HERGESTELLTE ELEKTRODENANORDNUNG
APPAREIL DE FABRICATION D'ENSEMBLE D'ÉLECTRODES POUR EMPÊCHER LE PLIAGE D'UN SÉPARATEUR ET ENSEMBLE D'ÉLECTRODES FABRIQUÉ À L'AIDE DE CELUI-CI

(30) Priority: 20.05.2022 KR 20220061860
(43) Date of publication of application: 06.03.2024
(73) Proprietor: LG Energy Solution, Ltd., Seoul 07335 (KR)
(72) Inventor: KIM, Do Hyoung, Daejeon 34122 (KR); GU, Dae Geun, Daejeon 34122 (KR); KIM, Ki Woong, Daejeon 34122 (KR)
(74) Representative: Plasseraud IP
(86) International application number: PCT/KR2023/005893
(87) International publication number: WO 2023/224287

(56) References cited:
- JP-A- 2014 072 114
- KR-A- 20160 141 448
- KR-A- 20170 114 351
- KR-A- 20180 116 907
- KR-A- 20200 113 823
- KR-B1- 102 164 576

## Description

### [Technical Field]

The present invention relates to an electrode assembly manufacturing apparatus for preventing separator folding and an electrode assembly manufactured using the same. More particularly, the present invention relates to an electrode assembly manufacturing apparatus capable of forming a fine embossed pattern on a part of a separator sheet to be cut in the state in which the separator sheet is stretched tightly, thereby preventing folding of a separator, and an electrode assembly manufactured using the same.

### [Background Art]

Lithium secondary batteries, which are rechargeable and have high energy density, have attracted attention as a new energy source with environmentally-friendly characteristics not only because the lithium secondary batteries can drastically reduce the use of fossil fuels but also because the lithium secondary batteries do not generate by-products from the use of energy.

Lithium secondary batteries are in the limelight as an energy source for devices having high output and high energy density, such as electric vehicles, as well as wearable devices or portable devices.

A lithium secondary battery may be constituted by a battery cell configured to have a unit structure in which an electrode assembly constituted by a positive electrode and a negative electrode stacked in the state in which a separator is disposed therebetween is received in a battery case together with an electrolytic solution.

The electrode assembly includes a half-cell, which is configured to have a structure in which one electrode and two separators are stacked in the state in which the electrode is disposed between the two separators, and a mono-cell, which is configured to have a structure in which two electrodes having different polarities are stacked in the state in which a separator is disposed at one side of each of the electrodes.

In order to manufacture the half-cell or the mono-cell, the two separators and the electrode are disposed so as to completely overlap each other in a stacking direction, and a lamination process of applying heat and pressure to the two separators and the electrode so as to adhere to each other is performed.

In general, a separator is designed to have a larger area than electrodes in order to secure insulation between different polarities, and the separator may be folded or wrinkled during a transfer process for manufacturing an electrode assembly, whereby a defective electrode assembly may be manufactured. If a battery cell is manufactured using the defective electrode assembly, short circuit may occur between electrodes having different polarities.

Consequently, various attempts to prevent separator folding and to minimize occurrence of defective electrode assemblies have been made.

Patent Document 1 relates to an electrode assembly manufacturing apparatus that performs a joining process in the state in which an electrode is aligned at a desired position. At the stage before the electrode is inserted into a joint, the electrode is fixed in position by a gripper, and the aligned electrode may be transferred to the joint by a guide roller, whereby it is possible to prevent misalignment of the electrode and the occurrence of steps.

However, Patent Document 1 does not disclose technology for preventing folding of a separator.

Patent Document 2 relates to an electrode assembly manufacturing method and an electrode assembly manufacturing apparatus that compensate for the meander of an electrode, wherein the electrode assembly manufacturing method includes a meander correction process of transferring an electrode and a separator in an X-axis direction, which is an advance direction of the electrode, and a Y-axis direction, which is a width direction of the electrode, in order to measure the center position of the electrode through a vision sensor and to move the positions of electrodes and a separator during electrode assembly manufacture, thereby compensating for position deviation.

Patent Document 2 discloses a method and apparatus for aligning the positions of the electrodes and the separator before a joining process of joining the electrodes and the separator; however, Patent Document 2 does not disclose technology for solving a problem, such as folding of the separator during electrode assembly transfer.

Patent Document 3 discloses a device for rolling an electrode sheet prepared by spreading two or more electrode combining coating layers separated from each other on a current collector. The device for rolling an electrode sheet comprises: a pair of first rollers which roll an electrode combining coating layer when an electrode sheet passes through a first rolling gap formed between the rollers, and rotating in the direction different to each other while having a rotation shaft as a center; and a pair of second rollers which rotate in the direction different to each other while having a rotation shaft as a center, and rolling portions of the current collector which do not have an electrode combining coating layer formed.

Patent Document 4 discloses a method for producing an electrode assembly in which at least two unit cells are wound up in a form of a separation film. More specifically, provided is a method for producing an electrode assembly, comprising the following steps: (a) producing unit cells in which a separation film is interposed between electrode plates consisting of a positive electrode or a negative electrode: (b) arranging the unit cells on an upper side of the sheet-like separation film at regular intervals; (c) fixating first unit cells positioned on an initial spot of winding of the separation film with a mandrel; (d) heat-compressing, onto the separation film, a separation film surplus part extended over an outer circumference of the electrode plate at an external end portion of the first unit cell; and (e) rotating the first unit cell by means of the mandrel so as to sequentially wind in the unit cells.

Therefore, there is a need for technology capable of preventing folding of a separator that is stacked on an electrode during manufacture of an electrode assembly, thereby preventing a defective electrode assembly from being manufactured during lamination.

### (Prior Art Documents)

(Patent Document 1) Korean Patent Application Publication No. 2017-0114351 (2017.10.16)
(Patent Document 2) Korean Patent Application Publication No. 2021-0058170 (2021.05.24)
(Patent Document 3) Korean Patent Application Publication No. 2016-0141448 (2016.12.09)
(Patent Document 4) Korean Patent Publication No. 10-2164576 (2020.10.12)

### [Disclosure]

### [Technical Problem]

The present invention has been made in view of the above problems, and it is an object of the present invention to provide an electrode assembly manufacturing apparatus capable of performing lamination in the state in which a separator of an electrode assembly is neither wrinkled nor folded, thereby preventing defects of the electrode assembly, and an electrode assembly manufactured using the same.

### [Technical Solution]

An electrode assembly manufacturing apparatus according to the present invention to accomplish the above object includes a first separator supply unit configured to supply a first separator sheet from a first separator roll, a first electrode supply unit configured to cut a first electrode withdrawn from a first electrode roll and to supply a first unit electrode, a second separator supply unit configured to supply a second separator sheet from a second separator roll, an anti-wrinkle unit configured to hold the first separator sheet and the second separator sheet to apply tension thereto, a surface treatment unit configured to form a fine embossed pattern on each of the first separator sheet and the second separator sheet, a lamination unit configured to apply heat and pressure to the first separator sheet, the first unit electrode, and the second separator sheet to attach to each other, and a cutting unit configured to cut the first separator sheet and the second separator sheet.

The electrode assembly manufacturing apparatus may further include a second electrode supply unit configured to cut a second electrode withdrawn from a second electrode roll and to supply a second unit electrode, wherein the lamination unit may apply pressure to the first separator sheet, the first unit electrode, the second separator sheet, and the second unit electrode to attach to each other.

The surface treatment unit may be located in the anti-wrinkle unit.

The surface treatment unit may be disposed at a rear end of the anti-wrinkle unit.

The anti-wrinkle unit may include a pair of first grippers configured to hold opposing ends of the first separator sheet along a direction parallel to an advance direction and a pair of second grippers configured to hold opposing ends of the second separator sheet along a direction parallel to the advance direction.

The pair of first grippers and the pair of second grippers may pull the opposing ends of the first separator sheet and the second separator sheet, respectively, such that the first separator sheet and the second separator sheet are stretched tightly.

Each of the first grippers and the second grippers may be configured to have a structure in which a plurality of unit grippers is disposed on a circulation type transfer line, and the circulation type transfer line may transfer the plurality of unit grippers at the same speed as the transfer speed of each of the first separator sheet and the second separator sheet.

The plurality of unit grippers may be movable so as to individually approach the first separator sheet and the second separator sheet or to individually move away from the first separator sheet and the second separator sheet.

The surface treatment unit may include a first surface treatment unit configured to treat a surface of the first separator sheet and a second surface treatment unit configured to treat a surface of the second separator sheet, each of the first surface treatment unit and the second surface treatment unit may include a lower die and an upper punch, and a fine protrusion may be formed on the upper punch.

The surface treatment unit may form the fine embossed pattern on a part of each of the first separator sheet and the second separator sheet to be cut.

In the state in which the first separator sheet and the second separator sheet are disposed so as to be stacked, the fine embossed pattern formed on the first separator sheet and the fine embossed pattern formed on the second separator sheet may be disposed so as to overlap each other.

The present invention provides an electrode assembly manufactured using the electrode assembly manufacturing apparatus, wherein an outer periphery of each of a first separator and a second separator includes a surplus portion extending beyond an outer periphery of a first unit electrode, and a fine embossed pattern is formed on the surplus portion of each of the first separator and the second separator.

The electrode assembly may be a half-cell including a first separator, a first unit electrode, and a second separator sequentially stacked or a mono-cell including a first separator, a first unit electrode, a second separator, and a second unit electrode sequentially stacked.

In addition, the present invention may provide various combinations of the above constructions.

### [Advantageous Effects]

As is apparent from the above description, in the present invention, lamination may be performed in the state in which a separator sheet is stretched tightly.

In addition, a fine embossed pattern is formed on the separator sheet, whereby it is possible to prevent slip between two separator sheets disposed so as to overlap each other.

### [Description of Drawings]

FIG. 1 is a schematic view of an electrode assembly manufacturing apparatus according to the present invention.
FIG. 2 is a plan view showing the state in which an anti-wrinkle unit according to the present invention holds a separator sheet.
FIG. 3 is a perspective view of FIG. 2.
FIG. 4 is a side view of the anti-wrinkle unit according to the present invention.
FIG. 5 is a front view of the anti-wrinkle unit according to the present invention.
FIG. 6 is a plan view of a separator sheet having a fine embossed pattern formed thereon.
FIG. 7 is a perspective view of a surface treatment unit.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

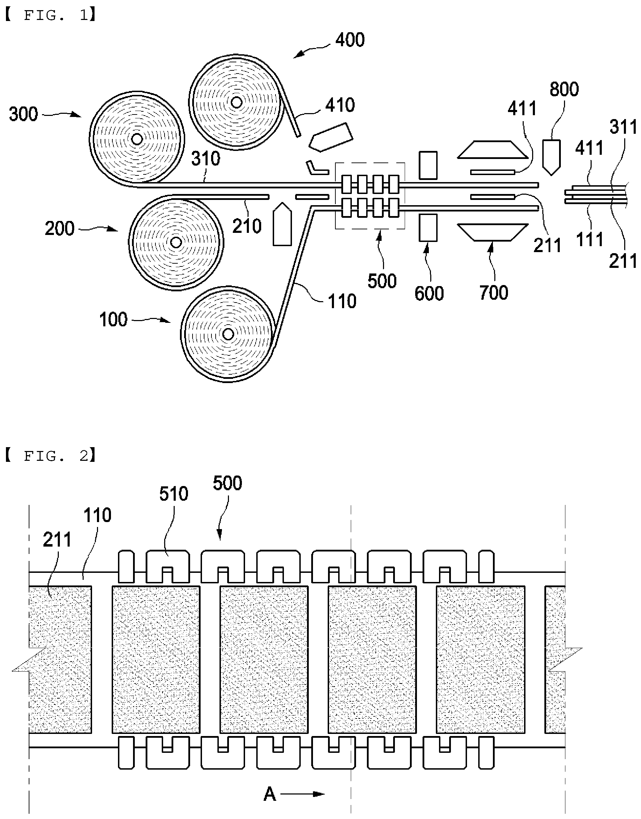

FIG. 1 is a schematic view of an electrode assembly manufacturing apparatus according to the present invention.

Referring to FIG. 1, the electrode assembly manufacturing apparatus according to the present invention includes a first separator supply unit 100 configured to supply a first separator sheet 110 from a first separator roll, a first electrode supply unit 200 configured to cut a first electrode 210 withdrawn from a first electrode roll and to supply a first unit electrode 211, a second separator supply unit 300 configured to supply a second separator sheet 310 from a second separator roll, an anti-wrinkle unit 500 configured to hold the first separator sheet 110 and the second separator sheet 310 in order to apply tension thereto, a surface treatment unit 600 configured to form a fine embossed pattern on each of the first separator sheet 110 and the second separator sheet 310, a lamination unit 700 configured to apply heat and pressure to the first separator sheet 110, the first unit electrode 211, and the second separator sheet 310 so as to be attached to each other, and a cutting unit 800 configured to cut the first separator sheet 110 and the second separator sheet 310.

The first separator sheet 110, the first unit electrode 211, and the second separator sheet 310 supplied respectively from the first separator supply unit 100, the first electrode supply unit 200, and the second separator supply unit 300 may be thermally bonded, and the first separator sheet 110 and the second separator sheet 310 may be cut by the cutting unit 800, whereby it is possible to manufacture a half-cell type electrode assembly.

Additionally, the electrode assembly manufacturing apparatus according to the present invention may further include a second electrode supply unit 400 configured to cut a second electrode 410 withdrawn from a second electrode roll and to supply a second unit electrode 411. The lamination unit 700 may apply pressure to the first separator sheet 110, the first unit electrode 211, the second separator sheet 310, and the second unit electrode 411 so as to be attached to each other, whereby it is possible to manufacture a mono-cell type electrode assembly.

That is, in the present invention, the anti-wrinkle unit 500 is provided in order to, when an electrode assembly including at least two separator sheets is manufactured, prevent the separator sheets from being folded or from being wrinkled.

Also, in order to increase the force of friction between two or more separator sheets that face each other, thereby preventing slip of the separator sheets during a transfer process, the surface treatment unit 600 is included, which is configured to form a fine embossed pattern on each of surfaces of the separator sheets that face each other.

In order to prevent each of the first separator sheet 110 and the second separator sheet 310 from being wrinkled, the anti-wrinkle unit 500 pulls the outer periphery of each of the first separator sheet 110 and the second separator sheet 310 such that each of the first separator sheet and the second separator sheet is stretched tightly.

The anti-wrinkle unit 500 is disposed at a front end of the lamination unit 700, whereby it is possible to prevent the separator sheet from being wrinkled before a stack constituted by the separator sheets and the electrode enters the lamination unit 700. When the lamination unit 700 applies heat and pressure to the stack constituted by the separator sheets and the electrode, therefore, the electrode and the separator sheets may be attached to each other in a flat state.

When the electrode assembly manufacturing apparatus according to the present invention is used, as described above, it is possible to prevent the separators from being folded or wrinkled, and therefore it is possible to solve a problem in that contact between electrodes having different polarities occurs due to poor attachment of the separators.

In a concrete example, when the surface treatment unit 600 is located in the anti-wrinkle unit 500, a process of forming a fine embossed pattern on an outer surface of each of the first separator sheet 110 and the second separator sheet 310 in the state in which each of the first separator sheet 110 and the second separator sheet 310 is stretched tightly may be performed.

Alternatively, the surface treatment unit 600 may be disposed at a rear end of the anti-wrinkle unit 500. When the first separator sheet 110 and the second separator sheet 310 stretched tightly by the anti-wrinkle unit 500 are moved to the surface treatment unit 600, the surface treatment unit 600 may form a fine embossed pattern on each of the first separator sheet 110 and the second separator sheet 310.

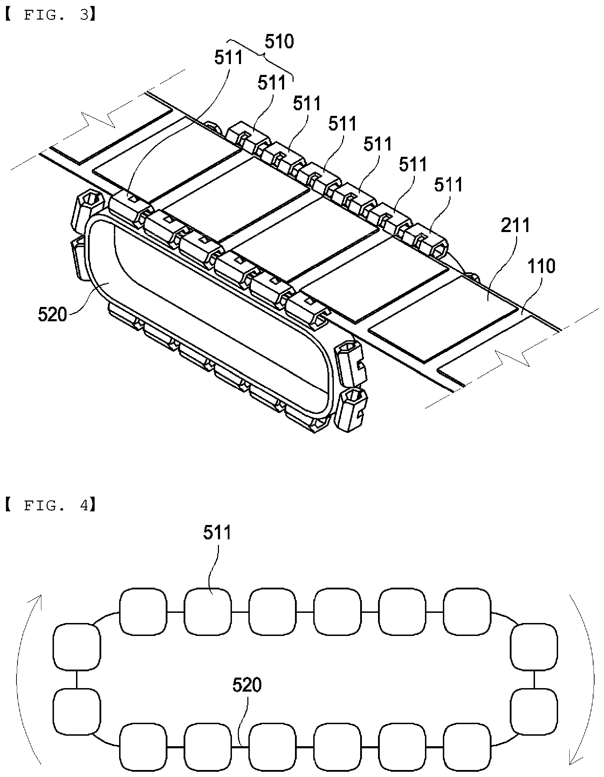

FIG. 2 is a plan view showing the state in which the anti-wrinkle unit according to the present invention holds a separator sheet, FIG. 3 is a perspective view of FIG. 2, and FIG. 4 is a side view of the anti-wrinkle unit according to the present invention. FIGs. 2 and 3 show one separator sheet and an anti-wrinkle unit configured to hold the one separator sheet; however, the one separator sheet includes the first separator sheet 110 or the second separator sheet 310. Consequently, a description of the first separator sheet 110 given with reference to FIGs. 2 and 3 may be equally applied to the second separator sheet.

In addition, FIGs. 2 to 4 show only a first gripper 510 configured to hold the first separator sheet; however, the following description of the first gripper 510 configured to hold the first separator sheet 110 may be equally applied to a second gripper configured to hold the second separator sheet 310.

Referring to FIGs. 2 to 4, the anti-wrinkle unit 500 according to the present invention includes a pair of first grippers 510 configured to hold opposing ends of the first separator sheet 110 parallel to an advance direction A and a pair of second grippers configured to hold opposing ends of the second separator sheet parallel to the advance direction.

Although the second grippers are not shown in the figures, the second separator sheet and the second grippers configured to hold the second separator sheet may be disposed above the first separator sheet 110 and the first grippers 510 configured to hold the first separator sheet.

First unit electrodes 211 are disposed on an upper surface of the first separator sheet 110 at regular intervals in the advance direction A. Surplus portions extending more than opposing ends of each of the first unit electrodes 211 are located at opposing ends of the first separator sheet 110 parallel to the advance direction A, and the first grippers 510 hold the surplus portions.

Consequently, it is possible to prevent the first unit electrodes 211 from being damaged by the first grippers 510 configured to hold the first separator sheet 110.

The first grippers 510 and the second grippers pull opposing ends of the first separator sheet 110 and the second separator sheet 310, respectively, such that the first separator sheet 110 and the second separator sheet 310 are stretched tightly. That is, the pair of first grippers 510 pulls the first separator sheet 110 in a direction in which the distance therebetween is increased such that the first separator sheet 110 is stretched tightly.

FIGs. 2 to 4 show the structure in which 16 pairs of first grippers 510 are disposed on a circulation type transfer line 520 in the advance direction A of the first separator sheet 110; however, the number of pairs of first grippers disposed on the circulation type transfer line 520 is not limited thereto.

The circulation type transfer line 520 is located at each of the opposing ends of the first separator sheet 110 parallel to the advance direction A, and a plurality of unit grippers 511 is disposed on each circulation type transfer line 520 at regular intervals.

The circulation type transfer line 520 transfers the plurality of unit grippers 511 while moving at the same speed as the transfer speed of each of the first separator sheet 110 and the second separator sheet 310.

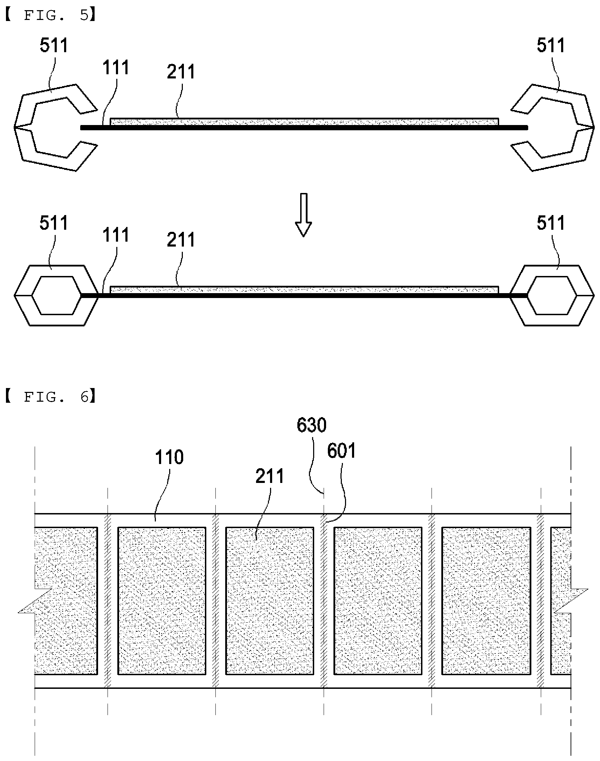

FIG. 5 is a front view of the anti-wrinkle unit according to the present invention.

Referring to FIG. 5, each of the plurality of unit grippers 511 may include an upper unit and a lower unit. One end of the upper unit and one end of the lower unit may function as a kind of axis of rotation in a state of being coupled to each other, and the other end of the upper unit and the other end of the lower unit may be deformed about the axis of rotation such that an open state and a closed state are repeated.

Specifically, the plurality of unit grippers 511 may move along the circulation type transfer line 520 in the state in which the upper unit and the lower unit are opened, as shown in an upper part of FIG. 5. When the plurality of unit grippers reaches the first separator sheet 110, the plurality of unit grippers may be deformed into a closed state in order to hold opposing ends of the first separator sheet 110 parallel to the advance direction A, whereby pulling force, i.e. tension, may be applied to the first separator sheet 110, as shown in a lower part of FIG. 5.

When the process in which the plurality of unit grippers 511 pulls the separator sheet while moving along the circulation type transfer line 520 is finished, the plurality of unit grippers releases the first separator sheet 110 and is deformed into the shape shown in the upper part of FIG. 5.

In addition, when the plurality of unit grippers 511 approaches the separator sheet while moving along the circulation type transfer line 520, the plurality of unit grippers moves closer to the separator sheet, and the open state of the unit grippers is changed to the closed state of the unit grippers to hold the surplus portions of the outer periphery of the separator sheet. Subsequently, the separator sheet is pulled such that the distance between the opposing ends of the separator sheet is increased in order to tightly stretch the separator sheet. When the process of pulling the separator sheet is finished, the closed state of the unit grippers may be changed to the open state of the unit grippers, and the unit grippers may move farther away from the separator sheet.

That is, in order to tightly stretch all separator sheets that continuously moves using the plurality of unit grippers 511, the plurality of unit grippers 511 may move closer to or farther away from the separator sheet.

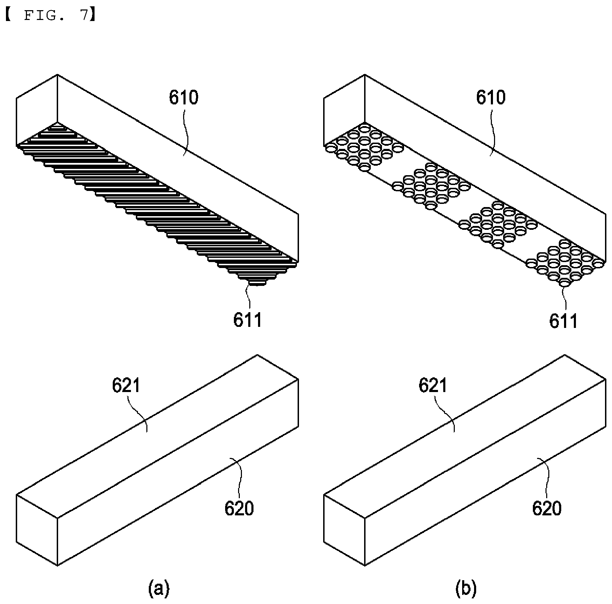

FIG. 6 is a plan view of a separator sheet having a fine embossed pattern formed thereon, and FIG. 7 is a perspective view of the surface treatment unit.

FIG. 6 shows one separator sheet and electrodes disposed thereon at regular intervals; however, the separator sheet shown in FIG. 6 includes the first separator sheet and the second separator sheet.

FIG. 7 shows two kinds of surface treatment units, wherein the surface treatment units include a first surface treatment unit configured to treat a surface of the first separator sheet and a second surface treatment unit configured to treat a surface of the second separator sheet, and the surface treatment units shown in FIG. 7 may be applied as the first surface treatment unit and the second surface treatment unit.

Referring to FIGs. 6 and 7, each of the first surface treatment unit and the second surface treatment unit includes a lower die 620 and an upper punch 610, wherein fine protrusions 611 are formed on a lower surface of the upper punch 610.

The shape of the fine protrusion 611 is not particularly restricted as long as a fine embossed pattern can be formed on a surface of the separator sheet when the separator sheet is pressed. For example, the fine protrusions may be formed in any of various shapes, such as a straight shape, a curved shape, a hemispherical shape, a cylindrical shape, a prismatic shape, etc. and may be formed on the entirety or a part of the lower surface of the upper punch.

Meanwhile, an upper surface 621 of the lower die 620 is flat. Consequently, a fine embossed pattern 601 may be formed on the upper surface of the first separator sheet 110 pressed by the upper punch having the fine protrusions 611 formed thereon, whereas no fine embossed pattern may be formed on a lower surface of the first separator sheet that faces the lower die, i.e. the lower surface of the first separator sheet may be flat.

In the state in which the first separator sheet 110 and the second separator sheet are disposed so as to be stacked, the fine embossed pattern 601 formed on the first separator sheet 110 and the fine embossed pattern 601 formed on the second separator sheet may be disposed so as to overlap each other.

In addition, the parts of the first separator sheet 110 and the second separator sheet 310 on each of which the fine embossed pattern 601 is formed by the surface treatment unit may be the parts of the first separator sheet and the second separator sheet that are cut. When the embossed pattern 601 is formed such that the middle of the embossed pattern 601 is disposed on a cutting line 630, a cut first separator 111 (FIG. 1) and a cut second separator 311 (FIG. 1) may remain attached to each other due to frictional force generated by the fine embossed pattern 601 when the first separator sheet 110 and the second separator sheet 310 are cut.

The electrode assembly manufactured using the electrode assembly manufacturing apparatus may be a half-cell, which is configured to have a structure in which a first separator, a first unit electrode, and a second separator are sequentially stacked, or a mono-cell, which is configured to have a structure in which a first separator, a first unit electrode, a second separator, and a second unit electrode are sequentially stacked. The first unit electrode and the second unit electrode may be a positive electrode and a negative electrode, respectively, or a negative electrode and a positive electrode, respectively.

In the electrode assembly, an outer periphery of each of the first separator and the second separator may include a surplus portion extending more than an outer periphery of the first unit electrode, and a fine embossed pattern may be formed on the surplus portion of each of the first separator and the second separator. That is, the fine embossed pattern may be formed on opposite side outer peripheries of the first separator and the second separator parallel to each other, among the outer peripheries of the first separator and the second separator, and friction between the separators may be increased by the fine embossed pattern formed on the surplus portions.

Consequently, it is possible to prevent the surplus portion of the separator from being folded in the process of transferring the electrode assembly, the process of stacking components of the electrode assembly, and the process of injecting an electrolytic solution in order to receive the electrode assembly in a battery case and to manufacture a battery cell.

### (Description of Reference Numerals)

- 100:: First separator supply unit
- 110:: First separator sheet
- 111:: First separator
- 200:: First electrode supply unit
- 210:: First electrode
- 211:: First unit electrode
- 300:: Second separator supply unit
- 310:: Second separator sheet
- 311:: Second separator
- 400:: Second electrode supply unit
- 410:: Second electrode
- 411:: Second unit electrode
- 500:: Anti-wrinkle unit
- 510:: First gripper
- 511:: Unit gripper
- 520:: Transfer line
- 600:: Surface treatment unit
- 601:: Fine embossed pattern
- 610:: Upper punch
- 611:: Fine protrusion
- 620:: Lower die
- 621:: Upper surface
- 630:: Cutting line
- 700:: Lamination unit
- 800:: Cutting unit

## Claims

1. An electrode assembly manufacturing apparatus comprising:
a first separator supply unit (100) configured to supply a first separator sheet (110) from a first separator roll; a first electrode supply unit (200) configured to cut a first electrode (210) withdrawn from a first electrode roll and tc supply a first unit electrode (211);
a second separator supply unit (300) configured to supply a second separator sheet (310) from a second separator roll;
an anti-wrinkle unit (500) configured to hold the first separator sheet (110) and the second separator sheet (310) to apply tension thereto;
a surface treatment unit (600) configured to form a fine embossed pattern (601) on each of the first separator sheet (110) and the second separator sheet (310);
a lamination unit (700) configured to apply heat and pressure to the first separator sheet (110), the first unit electrode (211), and the second separator sheet (310) to attach to each other; and
a cutting unit (800) configured to cut the first separator sheet (110) and the second separator sheet (310).

2. The electrode assembly manufacturing apparatus according to claim 1, further comprising:
a second electrode supply unit (400) configured to cut a second electrode (410) withdrawn from a second electrode roll and to supply a second unit electrode (411),
wherein the lamination unit applies pressure to the first separator sheet (110), the first unit electrode (211),
the second separator sheet (310), and the second unit electrode (411) to attach to each other.

3. The electrode assembly manufacturing apparatus according to claim 1, wherein the surface treatment unit is located in the anti-wrinkle unit.

4. The electrode assembly manufacturing apparatus according to claim 1, wherein the surface treatment unit (600) is disposed at a rear end of the anti-wrinkle unit (500)

5. The electrode assembly manufacturing apparatus according to claim 1, wherein the anti-wrinkle unit (500) comprises:
a pair of first grippers (510) configured to hold opposing ends of the first separator sheet (110) along a direction parallel to an advance direction; and
a pair of second grippers configured to hold opposing ends of the second separator sheet (310) along a direction parallel to the advance direction.

6. The electrode assembly manufacturing apparatus according to claim 5, wherein the pair of first grippers (510) and the pair of second grippers pull the opposing ends of the first separator sheet (110) and the second separator sheet (310), respectively, such that the first separator sheel (110) and the second separator sheet (310) are stretched tightly.

7. The electrode assembly manufacturing apparatus according to claim 5, wherein each of the first grippers (510) and the second grippers is configured to have a structure in which a plurality of unit grippers (511) is disposed on a circulation type transfer line (520), and the circulation type transfer line (520) transfers the plurality of unit grippers (511) at the same speed as a transfer speed of each of the first separator sheet (110) and the second separator sheet (310).

8. The electrode assembly manufacturing apparatus according to claim 7, wherein the plurality of unit grippers (511) is movable so as to individually approach the first separator sheet(110) and the second separator sheet (310) or tc individually move away from the first separator sheet (110) and the second separator sheet (310).

9. The electrode assembly manufacturing apparatus according to claim 1, wherein the surface treatment unit (600) comprises a first surface treatment unit configured to treat a surface of the first separator sheet (110) and a second surface treatment unit configured to treat a surface of the second separator sheet (310), each of the first surface treatment unit (600) and the second surface treatment unit comprises a lower die (620) and an upper punch (610), and a fine protrusion (611) is formed on the upper punch (610).

10. The electrode assembly manufacturing apparatus according to claim 1, wherein the surface treatment unit (600) forms the fine embossed pattern (601) on a part of each of the first separator sheet (110) and the second separator sheet (310) to be cut.

11. The electrode assembly manufacturing apparatus according to claim 10, wherein, in a state in which the first separator sheet (110) and the second separator sheet (310) are disposed so as to be stacked, the fine embossed pattern (601) formed on the first separator sheet (110) and the fine embossed pattern (601) formed on the second separator sheet (310) are disposed so as to overlap each other.

12. An electrode assembly manufactured using the electrode assembly manufacturing apparatus according to any one of claims 1 to 11, wherein an outer periphery of each of a first separator (111) and a second separator (311) comprises a surplus portion extending beyond an outer periphery of a first unit electrode (211), and a fine embossed pattern (601) is formed on the surplus portion of each of the first separator (111) and the second separator (311).

13. The electrode assembly according to claim 12, wherein the electrode assembly is a half-cell including a first separator (111), a first unit electrode (211), and a second separator (311) sequentially stacked or a mono-cell including a first separator (111) a first unit electrode (211), a second separator (311), and a second unit electrode (411) sequentially stacked.

## Patentansprüche

1. Vorrichtung zur Herstellung einer Elektrodenanordnung, umfassend:
eine erste Separatorzuführeinheit (100), welche dazu eingerichtet ist, eine erste Separatorbahn (110) von einer ersten Separatorrolle zuzuführen;
eine erste Elektrodenzuführeinheit (200), welche dazu eingerichtet ist, eine erste Elektrode (210) zu schneiden, welche von einer ersten Elektrodenrolle herausgezogen ist, und einer ersten Einheitselektrode (211) zuzuführen;
eine zweite Separatorzuführeinheit (300), welche dazu eingerichtet ist, eine zweite Separatorbahn (310) von einer zweiten Separatorrolle zuzuführen;
eine Antifalteneinheit (500), welche dazu eingerichtet ist, die erste Separatorbahn (110) und die zweite Separatorbahn (310) zu halten und einen Zug darauf anzuwenden;
eine Flächenbehandlungseinheit (600), welche dazu eingerichtet ist, ein feines geprägtes Muster (601) an jeder aus der ersten Separatorbahn (110) und der zweiten Separatorbahn (310) zu bilden;
eine Laminierungseinheit (700), welche dazu eingerichtet ist, Wärme und Druck auf die erste Separatorbahn (110), die erste Einheitselektrode (211) und die zweite Separatorbahn (310) aufzubringen, um sie aneinander anzubringen; und
eine Schneideinheit (800), welche dazu eingerichtet ist, die erste Separatorbahn (110) und die zweite Separatorbahn (310) zu schneiden.

2. Vorrichtung zur Herstellung einer Elektrodenanordnung nach Anspruch 1, ferner umfassend:
eine zweite Elektrodenzuführeinheit (400), welche dazu eingerichtet ist, eine zweite Elektrode (410) zu schneiden, welche von einer zweiten Elektrodenrolle herausgezogen ist, und einer zweiten Einheitselektrode (411) zuzuführen,
wobei die Laminierungseinheit Druck auf die erste Separatorbahn (110), die erste Einheitselektrode (211), die zweite Separatorbahn (310) und die zweite Einheitselektrode (411) aufbringt, um sie aneinander zu befestigen.

3. Vorrichtung zur Herstellung einer Elektrodenanordnung nach Anspruch 1, wobei sich die Flächenbehandlungseinheit in der Antifalteneinheit befindet.

4. Vorrichtung zur Herstellung einer Elektrodenanordnung nach Anspruch 1, wobei die Flächenbehandlungseinheit (600) an einem hinteren Ende der Antifalteneinheit (500) angeordnet ist.

5. Vorrichtung zur Herstellung einer Elektrodenanordnung nach Anspruch 1, wobei die Antifalteneinheit (500) umfasst:
ein Paar von ersten Greifern (510), welche dazu eingerichtet sind, entgegengesetzte Enden der ersten Separatorbahn (110) entlang einer Richtung zu halten, welche parallel zu einer Vorschubrichtung ist; und
ein Paar von zweiten Greifern, welche dazu eingerichtet sind, entgegengesetzte Enden der zweiten Separatorbahn (310) entlang einer Richtung zu halten, welche parallel zu der Vorschubrichtung ist.

6. Vorrichtung zur Herstellung einer Elektrodenanordnung nach Anspruch 5, wobei das Paar von ersten Greifern (510) und das Paar von zweiten Greifern die entgegengesetzten Enden der ersten Separatorbahn (110) und der zweiten Separatorbahn (310) jeweils derart ziehen, dass die erste Separatorbahn (110) und die zweite Separatorbahn (310) straff gespannt sind.

7. Vorrichtung zur Herstellung einer Elektrodenanordnung nach Anspruch 5, wobei jeder aus den ersten Greifern (510) und den zweiten Greifern dazu eingerichtet ist, eine Struktur aufzuweisen, in welcher eine Mehrzahl von Einheitsgreifern (511) an einer Förderstrecke (520) vom Zirkulationstyp angeordnet ist, und
wobei die Förderstrecke (520) vom Zirkulationstyp die Mehrzahl von Einheitsgreifern (511) mit der gleichen Geschwindigkeit wie eine Fördergeschwindigkeit von jeder aus der ersten Separatorbahn (110) und der zweiten Separatorbahn (310) fördert.

8. Vorrichtung zur Herstellung einer Elektrodenanordnung nach Anspruch 7, wobei die Mehrzahl von Einheitsgreifern (511) beweglich ist, um die erste Separatorbahn (110) und die zweite Separatorbahn (310) individuell anzunähern oder um sich von der ersten Separatorbahn (110) und der zweiten Separatorbahn (310) wegzubewegen.

9. Vorrichtung zur Herstellung einer Elektrodenanordnung nach Anspruch 1, wobei die Flächenbehandlungseinheit (600) eine erste Flächenbehandlungseinheit, welche dazu eingerichtet ist, eine Fläche der ersten Separatorbahn (110) zu behandeln, und eine zweite Flächenbehandlungseinheit umfasst, welche dazu eingerichtet ist, eine Fläche der zweiten Separatorbahn (310) zu behandeln,
wobei jede aus der ersten Flächenbehandlungseinheit (600) und der zweiten Flächenbehandlungseinheit eine untere Matrize (620) und einen oberen Stempel (610) umfasst, und
wobei ein feiner Vorsprung (611) an dem oberen Stempel (610) gebildet ist.

10. Vorrichtung zur Herstellung einer Elektrodenanordnung nach Anspruch 1, wobei die Flächenbehandlungseinheit (600) das feine geprägte Muster (601) an einem Teil jeder aus der ersten Separatorbahn (110) und der zweiten Separatorbahn (310) bildet, welcher geschnitten werden soll.

11. Vorrichtung zur Herstellung einer Elektrodenanordnung nach Anspruch 10, wobei, in einem Zustand, in welchem die erste Separatorbahn (110) und die zweite Separatorbahn (310) angeordnet sind, um gestapelt zu sein, das feine geprägte Muster (601), welches an der ersten Separatorbahn (110) gebildet ist, und das feine geprägte Muster (601), welches an der zweiten Separatorbahn (310) gebildet ist, angeordnet sind, um einander zu überlappen.

12. Elektrodenanordnung, welche unter Verwendung der Vorrichtung zur Herstellung einer Elektrodenanordnung nach einem der Ansprüche 1 bis 11 hergestellt ist, wobei
ein äußerer Umfang von jedem aus einem ersten Separator (111) und einem zweiten Separator (311) einen überschüssigen Abschnitt umfasst, welcher sich über einen äußeren Umfang einer ersten Einheitselektrode (211) hinweg erstreckt, und
ein feines geprägtes Muster (601) an dem überschüssigen Abschnitt von jedem aus dem ersten Separator (111) und dem zweiten Separator (311) gebildet ist.

13. Elektrodenanordnung nach Anspruch 12, wobei die Elektrodenanordnung eine Halbzelle, welche einen ersten Separator (111), eine erste Einheitselektrode (211) und einen zweiten Separator (311) umfasst, welche sequenziell gestapelt sind, oder eine Monozelle ist, welche einen ersten Separator (111), eine erste Einheitselektrode (211), einen zweiten Separator (311) und eine zweite Einheitselektrode (411) umfasst, welche sequenziell gestapelt sind.

## Revendications

1. Appareil de fabrication d'ensemble d'électrodes comprenant :
une première unité d'alimentation de séparateur (100) configurée pour alimenter une première feuille de séparateur (110) à partir d'un premier rouleau de séparateur ;
une première unité d'alimentation d'électrode (200) configurée pour couper une première électrode (210) retirée d'un premier rouleau d'électrode et pour alimenter une première électrode unitaire (211) ;
une seconde unité d'alimentation de séparateur (300) configurée pour alimenter une seconde feuille de séparateur (310) à partir d'un second rouleau de séparateur ;
une unité de prévention de plis (500) configurée pour maintenir la première feuille de séparateur (110) et la seconde feuille de séparateur (310) pour leur appliquer une tension ;
une unité de traitement de surface (600) configurée pour former un motif en relief fin (601) sur chacune de la première feuille de séparateur (110) et de la seconde feuille de séparateur (310) ;
une unité de stratification (700) configurée pour appliquer une chaleur et une pression à la première feuille de séparateur (110), à la première électrode unitaire (211) et à la seconde feuille de séparateur (310) pour les fixer entre elles ; et
une unité de coupe (800) configurée pour couper la première feuille de séparateur (110) et la seconde feuille de séparateur (310).

2. Appareil de fabrication d'ensemble d'électrodes selon la revendication 1, comprenant en outre :
une seconde unité d'alimentation d'électrode (400) configurée pour couper une seconde électrode (410) retirée d'un second rouleau d'électrode et pour alimenter une seconde électrode unitaire (411),
dans lequel l'unité de stratification applique une pression sur la première feuille de séparateur (110), la première électrode unitaire (211), la seconde feuille de séparateur (310) et la seconde électrode unitaire (411) pour les fixer entre elles.

3. Appareil de fabrication d'ensemble d'électrodes selon la revendication 1, dans lequel l'unité de traitement de surface est située dans l'unité de prévention de plis.

4. Appareil de fabrication d'ensemble d'électrodes selon la revendication 1, dans lequel l'unité de traitement de surface (600) est disposée au niveau d'une extrémité arrière de l'unité de prévention de plis (500).

5. Appareil de fabrication d'ensemble d'électrodes selon la revendication 1, dans lequel l'unité de prévention de plis (500) comprend :
une paire de premières pinces (510) configurées pour maintenir des extrémités opposées de la première feuille de séparateur (110) le long d'une direction parallèle à une direction d'avance ; et
une paire de secondes pinces configurées pour maintenir des extrémités opposées de la seconde feuille de séparateur (310) le long d'une direction parallèle à la direction d'avance.

6. Appareil de fabrication d'ensemble d'électrodes selon la revendication 5, dans lequel la paire de premières pinces (510) et la paire de secondes pinces tirent les extrémités opposées de la première feuille de séparateur (110) et de la seconde feuille de séparateur (310), respectivement, de sorte que la première feuille de séparateur (110) et la seconde feuille de séparateur (310) soient étirées fermement.

7. Appareil de fabrication d'ensemble d'électrodes selon la revendication 5, dans lequel chacune des premières pinces (510) et des secondes pinces est configurée pour présenter une structure dans laquelle une pluralité de pinces unitaires (511) est disposée sur une ligne de transfert de type à circulation (520), et la ligne de transfert de type à circulation (520) transfère la pluralité de pinces unitaires (511) à la même vitesse de transfert que chacune de la première feuille de séparateur (110) et de la seconde feuille de séparateur (310).

8. Appareil de fabrication d'ensemble d'électrodes selon la revendication 7, dans lequel la pluralité de pinces unitaires (511) est mobile de manière à s'approcher individuellement de la première feuille de séparateur (110) et de la seconde feuille de séparateur (310) ou à s'éloigner individuellement de la première feuille de séparateur (110) et de la seconde feuille de séparateur (310).

9. Appareil de fabrication d'ensemble d'électrodes selon la revendication 1, dans lequel
l'unité de traitement de surface (600) comprend une première unité de traitement de surface configurée pour traiter une surface de la première feuille de séparateur (110) et une seconde unité de traitement de surface configurée pour traiter une surface de la seconde feuille de séparateur (310),
chacune de la première unité de traitement de surface (600) et de la seconde unité de traitement de surface comprend une matrice inférieure (620) et un poinçon supérieur (610), et
une saillie fine (611) est formée sur le poinçon supérieur (610).

10. Appareil de fabrication d'ensemble d'électrodes selon la revendication 1, dans lequel l'unité de traitement de surface (600) forme le motif en relief fin (601) sur une partie de chacune de la première feuille de séparateur (110) et de la seconde feuille de séparateur (310) devant être coupées.

11. Appareil de fabrication d'ensemble d'électrodes selon la revendication 10, dans lequel, dans un état dans lequel la première feuille de séparateur (110) et la seconde feuille de séparateur (310) sont disposées de manière à être empilées, le motif en relief fin (601) formé sur la première feuille de séparateur (110) et le motif en relief fin (601) formé sur la seconde feuille de séparateur (310) sont disposés de manière à se chevaucher l'un l'autre.

12. Ensemble d'électrodes fabriqué à l'aide de l'appareil de fabrication d'ensembles d'électrodes selon l'une quelconque des revendications 1 à 11, dans lequel
une périphérie externe de chacun d'un premier séparateur (111) et d'un second séparateur (311) comprend une partie excédentaire s'étendant au-delà d'une périphérie externe d'une première électrode unitaire (211), et
un motif en relief fin (601) est formé sur la partie excédentaire de chacun du premier séparateur (111) et du second séparateur (311).

13. Ensemble d'électrodes selon la revendication 12, dans lequel l'ensemble d'électrodes est une demi-cellule incluant un premier séparateur (111), une première électrode unitaire (211) et un second séparateur (311) empilés séquentiellement ou une mono-cellule incluant un premier séparateur (111), une première électrode unitaire (211), un second séparateur (311) et une seconde électrode unitaire (411) empilés séquentiellement.
